# EUROPEAN PATENT SPECIFICATION

(11) **EP 1 658 684 B1**
(45) Date of publication and mention of the grant of the patent: **05.09.2007**
(21) Application number: 04741913.0
(22) Date of filing: 28.06.2004
(51) Int. Cl.: H04B 7/005

(54) **METHOD OF POWER CONTROL OF PILOT CHANNEL AND CORRESPONDING COMMUNICATION DEVICE**
VERFAHREN ZUR LESITUNGSREGELUNG VON EINEM PILOTKANAL UND ENTSPRECHENDE KOMMUNIKATIONSVORRICHTUNG
PROCEDE DE FONCTIONNEMENT D'UN DISPOSITIF DE COMMUNICATION ET DISPOSITIF DE COMMUNICATION CORRESPONDANT

(30) Priority: 20.08.2003 US 644544
(43) Date of publication of application: 24.05.2006
(73) Proprietor: MOTOROLA, INC., Schaumburg, IL 60196 (US)
(72) Inventor: WHINNETT, Nicholas, Barnfield, Marlborough Wiltshire SN8 2AX (GB); GHOSH, Amitava, Buffalo Grove, IL 60089 (US); LOVE, Robert, T., Barrington, IL 60010 (US); RATASUK, Rapeepat, Schaumburg, IL 60195 (US)
(74) Representative: Jepsen, René Pihl
(86) International application number: PCT/EP2004/051278
(87) International publication number: WO 2005/020463

(56) References cited:
- EP-A- 1 089 458
- WO-A-01/24402
- US-A1- 2003 050 086

## Description

The present invention relates to methods of operation of a communication device and to corresponding communication devices.

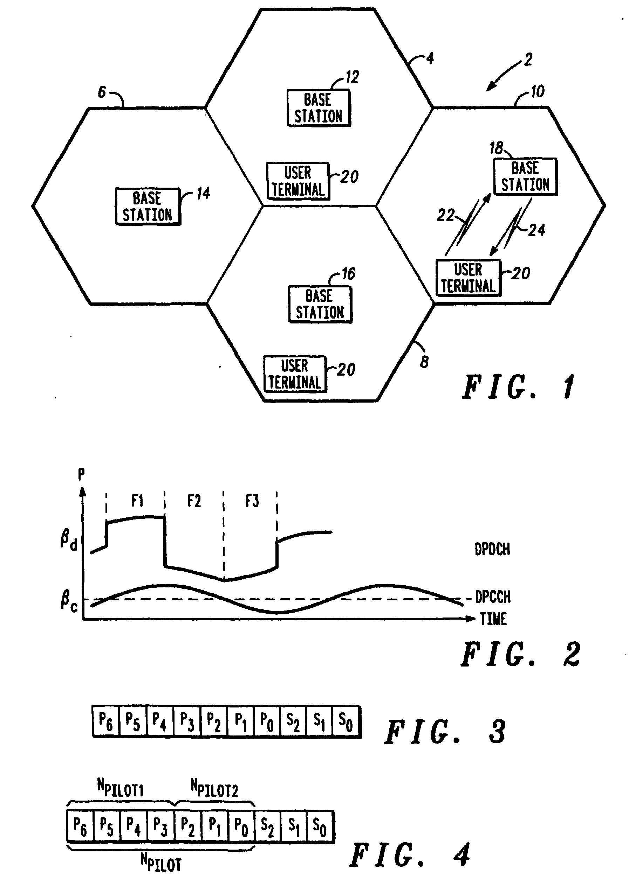

Many cellular communication systems are now available or are planned for the future. In a cellular communication system, such as the exemplary cellular communication system shown in Figure 1, the whole coverage area 2 of the communication system is divided into plurality of cells 4, 6, 8, 10, each cell 4, 6, 8, 10 having a respective serving base station 12, 14, 16, 18 to support communication with user terminals 20 within the cell. The term uplink 22 defines communications in the direction from a user terminal to the base station: the term downlink 24 defines communications in the direction from the base station to the user terminal.

Typically, the user terminals 20 are mobile user terminals that are able to move within the whole coverage area 2 of the cellular communication system. As the mobile user terminal moves from a first cell to a second cell of the cellular communication system, the signaling and/or traffic communication between the mobile user terminal and the cellular communication system is handed off from the serving base station of the first cell to the base station of the second cell.

One cellular communications system is the Universal Mobile Communication System (UMTS) that is currently undergoing standardization under the Third Generation Partnership Project (3GPP) of the European Telecommunication Standards Institute (ETSI).

UMTS is based on code division multiple access (CDMA) radio access technology. In CDMA communication systems, uplink and downlink control or data channels typically use a large bandwidth of radio frequency spectrum, for example in the region of 5MHz for UMTS channels.

In CDMA communication systems, signaling and/or traffic data is multiplied by a respective code prior to being transmitted on uplink or downlink control or data channels. The effect of the multiplication is to spread the original data over a wide bandwidth. At the receiver, the received wideband signal is multiplied by the same code that was used in the transmitter, resulting in the recovery of the original signaling or traffic data.

Separation between different channels is achieved by allocating a different code to each channel. Such channels are called code channels. Since different codes are used for different code channels, different code channels may be kept distinct from each other even though they are transmitted using the same radio frequency spectrum.

Figure 2 illustrates an exemplary change of power over time for an exemplary uplink traffic channel, and an exemplary associated uplink signaling channel, namely the Dedicated Physical Data Channel (DPDCH) and the Dedicated Physical Control Channel (DPCCH) defined for UMTS. A gain factor is applied to the Dedicated Physical Data Channel (DPDCH) and is denoted as β_{d} and a gain factor is applied to the Dedicated Physical Control Channel (DPCCH) and is denoted as β_{c}.

The uplink traffic channel and the uplink signaling channel are CDMA code channels and are used by a user device (called a UE for user equipment in UMTS terminology) to transmit traffic data and associated signaling information to a base station (called a node B in UMTS terminology). The terms UE and node B will be used hereafter to refer to the user terminal and the base station: however, the skilled person will understand that the following description may relate to other communication systems, and is not limited to UMTS.

Thus the DPDCH carries the traffic data being transmitted from the UE to the node B and the DPCCH carries the associated control information.

The DPCCH is divided into slots, each slot comprises 10 bits and uses a spreading factor (SF) of 256. Each slot contains some signaling information bits and pilot bits are transmitted in the remaining bits of the slot. The number of signaling information bits transmitted in a slot may vary depending on the signaling information, and the remaining bits of a slot are filled with Nₚᵢₗₒₜ pilot bits. Various different slot formats are defined for the DPCCH: in the defined slot formats the number of signaling bits per slot varies from 2 to 7, and the number of pilot bits per slot varies from 8 to 3 correspondingly.

Figure 3 shows an exemplary slot structure for the DPCCH. In the exemplary slot structure shown in Figure 3, three bits S0-S2 are used to carry signaling information and the remaining seven bits P0-P6 are pilot bits.

The pilot bits sent by the UE on the DPCCH are used by the Node B to perform power control and channel estimation processes. These processes will be explained in more detail below.

Firstly, the power control process will be described, in which the node B controls the power at which the UE is transmitting.

Since a UE may be located anywhere within the cell served by a node B, the radio propagation loss between the UE and the node B may vary significantly. Furthermore, fluctuations due to multi-path fading result in short term variations in propagation loss. In order to control interference within the communication system and overcome the near-far problem, generally it is desirable for the node B to control the power at which UE is allowed to transmit on uplink channels to minimize interference while ensuring that the uplink signal power received at the node B is sufficient to allow recovery of the information from received signals at an acceptable error rate.

This is achieved in the power control process executed by the node B by measuring the received power (or signal to interference ratio SIR) of the pilot bits on a DPCCH slot (pilot bits P0-P6 in the exemplary slot shown in Figure 3), comparing the actual received power to a threshold power (or SIR), and sending a downlink command to the UE to increase the transmit power incrementally if the received power is less than the threshold power or sending a downlink command to the UE to decrease the transmit power incrementally if the received power is more than the threshold power.

On receipt on the power control command from the node B, the UE will incrementally adjust the DPCCH transmit power up or down in accordance with the incremental increase or incremental decrease power control command received from the node B. Thus, over time and assuming that the radio propagation conditions between the UE and the node B are relatively constant, the DPCCH transmit power will tend to oscillate about a desired transmit power level as shown. The ratio of β_{c} /β_{d} decreases as the data rate is increased, i.e. β_{c} is low for high data rates and high for low data rates.

Secondly, the channel estimation process will now be described.

In the channel estimation process the base station performs a correlation on the received pilot bits on a DPCCH slot (pilot bits P0-P6 in the exemplary slot shown in Figure 3) to obtain channel estimation information relating to the phase shift and/or gain associated with the channel propagation conditions. Channel estimation is a necessary step in correctly receiving (demodulating and decoding) uplink signals, which typically takes place at the base station (node B).

As mentioned above, the DPDCH carries the traffic data being transmitted from the UE to the node B. UMTS provides that the data rate used by the UE on the uplink may vary between frames or sub-frames. The current UMTS standards only allow the data rate to vary on a Transmission Time Interval (TTI) basis, where a TTI can be one to four 10 ms frames or a single 2 ms sub-frame. In addition, the gain factor β_{d} (and thus the power offset between DPDCH and DPCCH) used to transmit the traffic data may vary according to the data rate at which the traffic data is to be transmitted.

Specifically in UMTS a set of Transport Format Combinations (TFC) are defined for the UE to use, the TFCs defining information relating to data rate for transmission of data on the DPDCH and gain factors β_{d} and β_{c} for the DPDCH and the DPCCH. In each radio frame the UE selects a TFC, and signals on the DPCCH to inform the node B of the selected TFC. In addition, after applying the gain factors, the transmit power of the DPDCH and the DPCCH are scaled by the UE such that the DPCCH output power follows the changes required by the power control process as described above.

Exemplary transmit powers β_{d} and β_{c} for the DPDCH and the DPCCH respectively resulting from the application of this method are shown in Figure 2. Thus in frame F1 a relatively high data rate is being used for the traffic data, and the offset of β_{d} from β_{c} is relatively large. In contrast, in frame F2 and F3 a relatively low data rate is being used for the traffic data, and the offset of β_{d} from β_{c} is relatively small. Within all three frames F1-F3 the β_{d} power gain level for the DPDCH generally tracks the movement of the β_{c} power gain level for the DPCCH, albeit with a constant offset or ratio; the power level for the DPCCH varies in accordance with the power control signaling received from the node B.

It should be noted that the offset or ratio defining the difference between the β_{d} power level for the DPDCH and the β_{c} power level for the DPCCH depends on the data rate of the traffic data, and therefore may potentially change each frame (in the uplink defined for 3GPP R99, R4, R5) or sub-frame (for enhanced uplink currently being studied for future releases of the standard. In contrast, the alteration of the DPCCH power level resulting from the power control signaling depends on the application of the power control process applied by the node B to received DPCCH slots and therefore occurs more frequently.

It is desirable to improve channel estimation performance for different traffic data rates. However in the current arrangement the channel estimation performance depends on the transmit power of the DPCCH. The transmit power of the DPCCH might be set at a level that is sufficient to enable channel estimation performance at higher data rates with high performance, but this level would cause excessive interference at lower data rates; or might be set at a lower level to reduce unnecessary interference at lower data rates, resulting in inadequate channel estimation performance at higher data rates. Note that generally the air interface can support fewer high data rate connections than low data rate connections, and therefore for a fixed DPCCH power there is more total interference caused by DPCCH on low data rate connections than on high data rate connections.

United States patent Application US 2003/050086 A1 describes a mobile communication system wherein a reference pilot signal level is allocated to each of a plurality of data rates supported by the system. European Patent Application EP 089 458 A1 discloses a system of adjusting the power offset between a DPCCH and a DPDCH.

The present invention seeks to alleviate at least some of the disadvantages of the prior art.

Specifically, embodiments seek to enable power control of uplink channels to maximize uplink performance while minimizing unnecessary interference.

For a better understanding of the present invention, and to show how it may be brought into effect, reference will now be made, by way of example, to the accompanying drawings, in which:
Figure 1 shows an exemplary cellular communication system;
Figure 2 shows an exemplary change of power over time for an uplink traffic channel and an associated uplink signaling channel in a prior art system;
Figure 3 shows an exemplary slot structure for the signaling channel shown in Figure 2;
Figure 4 shows an exemplary slot structure for a signaling channel in accordance with a first embodiment;
Figure 5 illustrates shows information relating to further exemplary slot structures;
Figure 6 is a flow chart illustrating the operation of a user device in accordance with a first embodiment;
Figure 7 is a flow chart illustrating the operation of a base station in accordance with a first embodiment;
Figure 8 shows exemplary change of power over time for an uplink traffic channel and an associated uplink signaling channel for a second embodiment;
Figure 9 is a flow chart illustrating a first aspect of the operation of a user device in accordance with the second embodiment;
Figure 10 is a flow chart illustrating the operation of a base station in accordance with a second embodiment;
Figure 11 illustrated exemplary power control commands in accordance with the second embodiment; and
Figure 12 is a flow chart illustrating a second aspect of the operation of a user device in accordance with the second embodiment.

Although the embodiments are described within the context of a UMTS system employing CDMA radio access technology, it should be noted that the invention is not intended to be limited thereto, and may be applicable to other systems such as other CDMA systems and also to Orthogonal Frequency Division Multiplex (OFDM) and Time Division Multiple Access (TDMA) systems as will be apparent to a skilled person.

A first embodiment will now be described with reference to Figures 4-7.

Figure 4 shows an exemplary slot structure for a control channel in accordance with a first embodiment. This exemplary slot structure will be described for use on the DPCCH of UMTS, as standardized and so the description will relate to the channels and system substantially as described above with reference to Figure 2 apart from a new slot structure to be used on the DPCCH. However, a skilled person will realize that the invention is not intended to be limited to the UMTS system nor to the specifics of the operation of UMTS.

The exemplary slot structure in accordance with the first embodiment comprises three signaling bits and seven pilot bits, similar to the slot structure shown in Figure 3. However, instead of Nₚᵢₗₒₜ pilot bits, the pilot bits are divided into a first group of Nₚᵢₗₒₜ₁ pilot bits and a second group of Nₚᵢₗₒₜ₂ pilot bits, where Nₚᵢₗₒₜ₁ + Nₚᵢₗₒₜ₂ = Nₚᵢₗₒₜ. In the exemplary slot structure shown in Figure 4, Nₚᵢₗₒₜ₁=4, Nₚᵢₗₒₜ₂=3 and Nₚᵢₗₒₜ=7.

The groups of pilot bits Nₚᵢₗₒₜ₁ and Nₚᵢₗₒₜ₂ are used differently from each other in the exemplary slot structure in accordance with the first embodiment as shown in Figure 4. Specifically, only the Nₚᵢₗₒₜ₁ group of pilot bits is to be used as power control bits, whereas all of the pilot bits Nₚᵢₗₒₜ=Nₚᵢₗₒₜ₁ + Nₚᵢₗₒₜ₂ are to be used in channel estimation.

Thus the Nₚᵢₗₒₜ₁ group of pilot bits is transmitted at a power that follows the power control commands but which is independent of the data rate being used on the associated traffic channel (DPDCH) whereas the power at which the Nₚᵢₗₒₜ₂ group of pilot bits are transmitted may be varied depending on the data rate being used on the associated traffic channel (DPDCH). In particular, the Nₚᵢₗₒₜ₂ group of pilot bits (which can also be referred to as a group of pilot symbols) are transmitted at a higher power when the data rate on the associated traffic channel (DPDCH) is high and are transmitted at a lower power (or even at zero power, which is referred to as discontinuous transmission DTX) when the data rate on the associated traffic channel (DPDCH) is low.

The node B applies the power control process (e.g. SIR estimation) only to the Nₚᵢₗₒₜ₁bit group (hereto also referred to as the power control pilot bits). The node B is therefore able to apply the power control process consistently irrespective of the data rate being used for the associated traffic channel (DPDCH), which may change from sub-frame to sub-frame (or from frame to frame), because the Nₚᵢₗₒₜ₁ bit group are transmitted at a power level determined by a constant β_{c} irrespective of the data rate being used on the associated traffic channel (DPDCH). That is, any changes in uplink Nₚᵢₗₒₜ₁ power level will be due to reverse power control updates, and not from changes in β_{c}, which is held constant instead of varying with selected uplink transmission rates.

In contrast, the node B applies the channel estimation process to all Nₚᵢₗₒₜ pilot bits. Since the Nₚᵢₗₒₜ₂ bit group is transmitted with variable power from changing its corresponding power gain factor β_{c2} on a frame by frame (or sub-frame-by-sub-frame) basis depending on the data rate being used on the associated traffic channel (DPDCH), the total power of the Nₚᵢₗₒₜ pilot bit group will also vary according to the data rate being used on the associated traffic channel (DPDCH).

Therefore more accurate channel estimation can be achieved at higher traffic data rates because more power is available for channel estimation at higher traffic data rates owing to the use of higher power in the Nₚᵢₗₒₜ₂ group of bits at higher traffic data rates. Simultaneously, unnecessary interference at low traffic data rates is minimized owing to the use of lower or zero power in the Nₚᵢₗₒₜ₂ group of bits at lower traffic data rates.

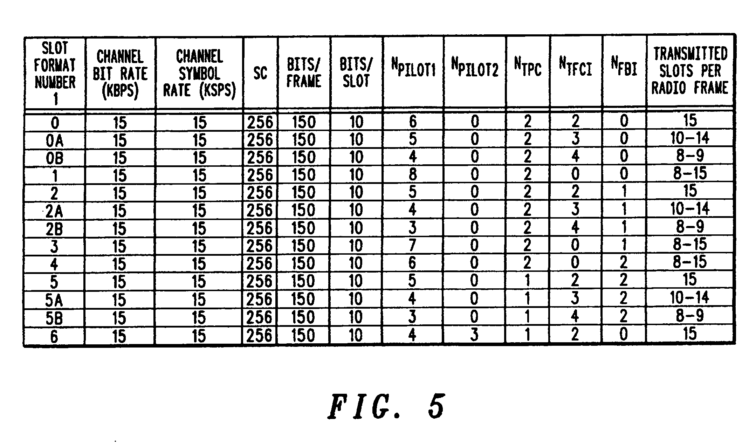

Figure 5 illustrates information relating to the slot formats 0-5B currently available for use in the DPCCH of UMTS. The exemplary slot shown in Figure 4 has been added as slot format 6 with possible exemplary information. However, it would be possible to adapt any of the existing slot formats 0-5B to have different pilot groups in accordance with the principles of the first embodiment, as will be apparent to a skilled person.

An exemplary method of operation of the UE in accordance with the first embodiment is shown in Figure 6.

The gain factor β_{c1} for transmission of the Nₚᵢₗₒₜ₁ pilot bits is determined, step s2. The gain factor β_{c2} for transmission of the Nₚᵢₗₒₜ₂ pilot bits is determined, step s4. As indicated above, this relates to the traffic data rate. The gain factor β_{d} for transmission of the data bits is determined, s6. It should be noted that the steps S2-S6 may be carried out in any order or simultaneously.

The gain factor β_{c} for transmission of the signaling bits on the DPCCH will generally be the same as the gain factor β_{c1} for transmission of the Nₚᵢₗₒₜ₁ pilot bits determined in step s2, and therefore this step has not been shown separately. Once all gain factors are known, the UE either scales the calculated gain factors, or instead scales the aggregate (combined) signal, according to the power control commands such that the power of all channels and bit fields reflects the power control commands, step s8, prior to transmission of the traffic data on the DPDCH and the transmission of the pilot bits and signaling bits on the DPCCH, step s10.

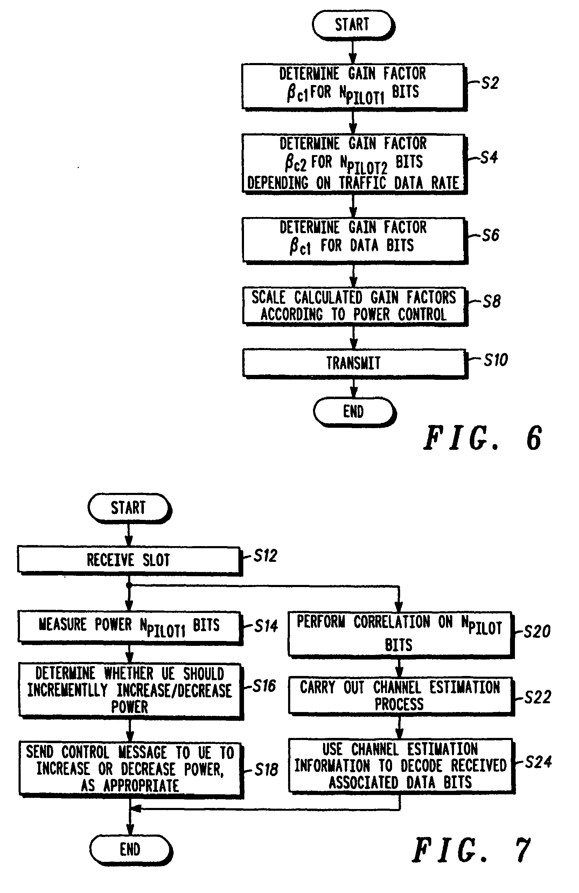

An exemplary method of operation of the node B for carrying out a power control process and a channel estimation process in accordance with the first embodiment is shown in Figure 7.

The power control process carried out by the base station on receipt of a slot on the DPCCH, step s12, will be described with reference to steps s14-s18 in Figure 7.

The power (or SIR) of the Nₚᵢₗₒₜ₁ bits is measured, step s14, and in step 16 the measured power (or SIR) is compared to a threshold in order to determine whether the UE should incrementally increase or decrease the transmit power. A control message instructing the UE incrementally to increase or to decrease the transmit power is then sent to the UE as appropriate, step s18.

The channel estimation process carried out by the base station on receipt of a slot on the DPCCH, step s12, will be described with reference to steps s 20-24 in Figure 7.

All of the Nₚᵢₗₒₜ received pilot bits are compared with the known transmitted values, step s20, and used in a channel estimation process, step s22. The channel estimation process may be any channel estimation process, as will be apparent to a skilled person. The resulting channel estimation information is used to provide information about the radio channel to assist in decoding the received associated traffic data. The additional pilot bits Nₚᵢₗₒₜ₂ may be buffered until the Transport Format Combination Indicator (TFCI) for the corresponding radio frame is decoded, so that the relative powers between the Nₚᵢₗₒₜ₁ and Nₚᵢₗₒₜ₂ pilot bits are known, which allows the channel to be estimated optimally.

In an alternative embodiment, the Nₚᵢₗₒₜ₂ pilot bits can also be used in the power control process along with the Nₚᵢₗₒₜ₁ bits for the last part of the DPCCH TTI for two cases. One case is when the TFC information is sent on a separate channel (e.g. the Transport Format Reference Indicator (TFRI) channel) that terminates prior to the end of the DPCCH TTI and is successfully decoded. The other case is if the TFCI field on the DPCCH TTI terminates and is decoded prior to the end of the DPCCH TTI interval. In these two cases the β_{c2} can be determined by the Node B by using TFCI or TFRI rate information with a lookup table containing the β_{c2} assigned for each possible rate used by the UE. Therefore, for the DPCCH slots (0.67ms intervals in WCDMA) which occur after rate determination and table lookup of β_{c2} has occurred (via TFCI field or TFRI information) but before the end of the corresponding DPCCH TTI then the Nₚᵢₗₒₜ₂ along with Nₚᵢₗₒₜ₁ bits can be used in the per slot (inner loop) power control process (e.g. SIR estimation).

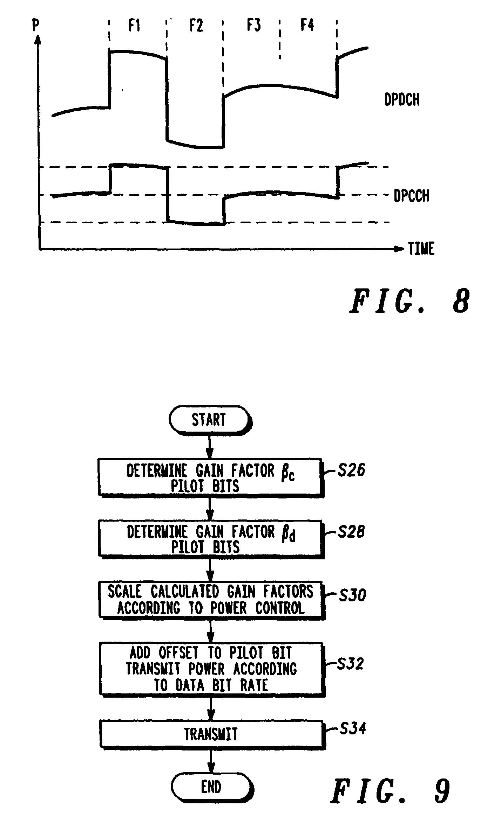

A second embodiment will now be described with reference to Figures 8-12

The second embodiment will be described in the context of DPCCH power control in UMTS, as standardized. However, a skilled person will realize that the invention is not intended to be limited to the UMTS system nor to the specifics of the operation of UMTS described above.

In the second embodiment, the UE alters the transmit power of the DPCCH according to the data rate of the traffic data to be sent on the associated traffic channel. For example, the UE may have a number of different transmit powers at which the DPCCH is transmitted, and the DPCCH is transmitted at one of the available transmit powers in each frame or sub-frame depending on the data rate of the data transmitted in that frame or sub-frame on the associated traffic channel DPDCH.

This may be achieved, for example, by specifying an offset from a base level transmit power, each offset corresponding to one of the permitted TFCs or to a data transmission rate, for example. Alternatively, the UE may determine an offset or an absolute power or a power gain factor from the selected TFC, or from the data rate to be used for the traffic data transmission, or from any parameter related to the traffic data rate.

The node B applies the power control process using a plurality of thresholds corresponding to the plurality of transmit powers, and sends a power control message to the UE informing the UE of the magnitude of the received power relative to at least one of the thresholds. Alternatively, the node B could send multiple power control commands, one per threshold, on the downlink DPCCH.

Since the UE knows the transmit power that was used to transmit the DPCCH, and is informed by the power control message of the magnitude of the received power relative to at least one of the thresholds, or is provided with multiple power control commands, the UE is able to determine whether incrementally to increase or to decrease the transmitted power. Alternatively, since the UE knows at which rate it transmitted, it will choose the right power control command corresponding to the power control signal received on the downlink

Figure 8 shows power levels against time for the DPDCH and the DPCCH defined for UMTS using the techniques in accordance with the second embodiment. The following explanation assumes that the slot format used on the DPCCH is as described with reference to Figure 3: however it is also possible for the slot format shown in Figure 4 or any other control data format to be used instead.

Three desired power levels DP1-DP3 are defined in the exemplary embodiment, but this is not necessary to the invention. The use of three thresholds defines four areas within which the power received at the node B can fall. This enables the power control message to be sent from the node B to the UE using two bits. However, if desired, only two thresholds may be used with a two bit power control message, or more than three thresholds may be used with a three or more bit power control message. In general the power control message may be sent using any suitable coding and modulation technique. For example, the two bit power control message may be sent using quadrature phase shift keying (QPSK).

In frame or sub-frame SF1 the UE selects a TFC corresponding to a high data rate for transmission of traffic data and to a transmit power at desired power level 1. In frame or sub-frame SF2 the UE selects a TFC corresponding to a low data rate for transmission of traffic data and to a transmit power at desired power level 3. In frames or sub-frames SF3 and SF4 the UE selects a TFC corresponding to a medium data rate for transmission of traffic data and to a transmit power at desired power level 2.

In the exemplary second embodiment, the transmission at the variable power level corresponding with the different data transmission rates is achieved by allowing the UE to carry out the power level calculation using the gain factors β_{c} and β_{d} and subsequent scaling to a nominal power level, as described above with reference to Figure 2, and then to apply an offset to the DPCCH transmit power defined by the selected TFC.

Clearly, there does not have to be a one-to-one mapping between the TFC or data rate parameter and the available desired power levels.

The operation of the UE on transmission in the second embodiment will now be explained with reference to Figure 9.

The UE determines the gain factor β_{c} to be used in transmitting the pilot bits on the DPCCH, step s26, and the gain factor β_{d} to be used in transmitting the data bits on the DPDCH, step 28. These gain factors are scaled according to the power control commands received from the node B, as indicated above, to obtain the transmit powers for the DPCCH and the DPDCH, step 30. Finally an offset to the pilot bit transmit power, or to the DPCCH transmit power is determined, related to the traffic data rate, and added to the calculated transmit power, step 32, prior to transmission of the DPDCH and the DPCCH, step s34.

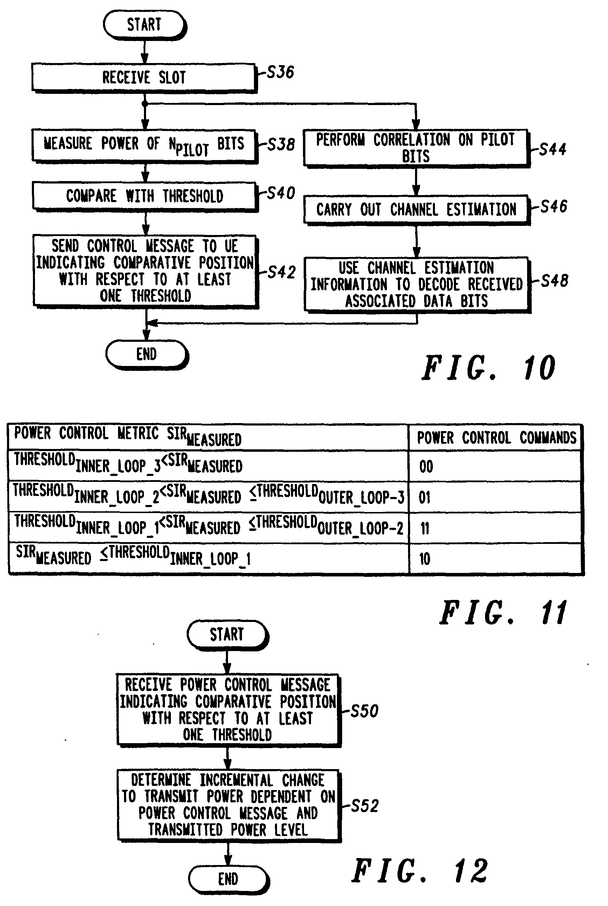

The power control process (i.e. SIR estimation for example) carried out by the base station on receipt of a slot on the DPCCH, step s36, will be described with reference to steps s38-s42 in Figure 10.

The power (or SIR) of the Nₚᵢₗₒₜ bits is measured, step s38, and in step s40 the measured power (or SIR) is compared to thresholds corresponding to the plurality of desired transmit powers available to the UE to determine a relative position with respect to at least one of the thresholds. As explained above, in this exemplary embodiment, the number of thresholds is three. A skilled person will note that it may not be necessary in all cases to compare the received power or S/N ratio with the thresholds: for example, if the received power or S/N is above the highest threshold, there is little point in a comparison with the remaining thresholds and in some implementations these comparisons may be omitted.

A control message instructing the UE of the received power level relative to the multiple thresholds (or incrementally to increase or to decrease the transmit power per threshold) is then sent to the UE as appropriate, step s18.

As will be apparent to a skilled person, the use of three thresholds allows four relative positions of the received power or S/N ratio relative to the thresholds to be defined, ie above threshold 1, between threshold 1 and threshold 2, between thresholds 2 and threshold 3 and below threshold 3. As a result of the comparison with the thresholds in step 40, a power control message indicating the relative position of the received power or SIR to the thresholds may be sent to the UE, step 42.

Exemplary power control commands, for example as might be sent to a UE using QPSK, are shown in Figure 11.

The channel estimation process carried out by the base station on receipt of a slot on the DPCCH, step s36 will be described with reference to steps s44-48 in Figure 10.

The received Nₚᵢₗₒₜ received pilot bits are used to perform a correlation, step s44, and the resulting correlation results are used in a channel estimation process, step s46. The resulting channel estimation information is used to provide information about the radio channel to assist in decoding the received associated traffic data, s48. The node B may buffer the pilot symbols until TFCI is decoded before performing channel estimation used for reception of the associated DPDCH. This enables the variation in pilot bit power due to changing data rate to be taken account of in the channel estimation process, otherwise step changes in pilot energy would be input to the CE filter.

The operation of the UE on receipt of the power control message will now be explained with reference to Figure 12.

In accordance with the second embodiment the UE receives a power control message that indicates the position of the received power or SI relative to the thresholds corresponding to the desired transmit levels, step 50. An example of such a power control signal is shown in Figure 11 described above.

Since the UE knows at which desired transmit level the DPCCH was transmitted, the UE is able to determine what incremental change is required to the transmit power as a result of the relative position of the received power and the thresholds.

For example, if the power control message indicates that the received power or SIR is between the highest threshold and the second highest threshold (middle threshold in this example having only three thresholds), i.e. the power control command is 01 according to the exemplary commands in Figure 11, and the UE had transmitted at the highest desired power level, the UE would determine that an incremental increase in the transmit power was required. In contrast, if the power control message indicates that the received power or S/N ratio is above the highest threshold, i.e. the power control command is 00 according to the exemplary commands in Figure 11, and the UE had transmitted at the highest desired power level, the UE would determine that an incremental decrease in the transmit power was required.

Therefore more accurate channel estimation can be achieved at higher traffic data rates owing to the use of higher power for the pilot bits at higher traffic data rates. Simultaneously, unnecessary interference at low traffic data rates is minimized owing to the use of lower power for the pilot bits at lower traffic data rates.

## Claims

1. A method of operation of a communication device for transmitting pilot bits and data bits associated with the pilot bits, the method **characterized by** the steps of:
dividing a set of pilot bits in a message into a first set of pilot bits and a second set of pilot bits;
sending the first set of pilot bits at a first power level independent of the data rate of the associated data bits (s2); and
sending the second set of pilot bits at a power level dependent on the data rate of the associated data bits (s4).

2. The method of operation of a communication device as claimed in claim 1, wherein at least the second set of pilot bits are used to provide channel estimation and to minimize impact on the power control process and minimize interference.

3. The method of operation of a communication device as claimed in claim 1, wherein the first set of pilot bits are used to provide power control.

4. The method of operation of a communication device as claimed in claim 1 wherein the power level of the second set of pilot bits is set to zero at low data rates of the associated data bits.

5. The method of operation of a communication device as claimed in claim 1 further comprising the steps of
determining a first gain factor for the first set of pilot bits (s2);
determining a second gain factor for the second set of pilot bits (s4);
determining a data gain factor for the data bits (s6); and
scaling the power at which the data bits and the pilot bits are transmitted in accordance with the respective gain factors and a received power control message (s8).

6. The method of operation of a communication device as claimed in claim 5 wherein the second gain factor for the second set of pilot bits is set to zero at low data rates of the associated data bits.

7. The method of operation of a communication device as claimed in claim 1 wherein the second set of pilot bits are buffered prior to the step of deriving channel estimation information.

8. The method of operation of a communication device as claimed in claim 1, further comprising the steps of:
determining the gain factor used for transmitting the second set of pilot bits;
deriving power control information from the first set of pilot bits and also from the second set of pilot bits using the determined gain factor.

9. The method of operation of a communication device as claimed in claim 8, wherein the gain factor used for transmitting the second set of pilot bits is determined from signaling information received from the user device.

10. The method of operation of a communication device as claimed in claim 1, further comprising the steps of:
receiving pilot bits, associated with data bits, at a received signal level from a user device (s36);
comparing the received signal level to a plurality of threshold values (s40); transmitting a power control command indicating a position of the received signal level relative to at least one of the plurality of thresholds (s42).

11. The method of operation of a communication device as claimed in claim 10 wherein the step of transmitting a power control command includes the step of transmitting multiple power control commands, each indicating the position of the received signal level to one of the plurality of thresholds.

12. The method of operation of a communication device as claimed in claim 10 wherein the thresholds define a plurality of areas and the step of transmitting a power control command to the user device indicating the position of the received signal level relative to at least one of the plurality of thresholds comprises the step of transmitting a power control command indicating the position of the received signal level within one of the areas defined by the thresholds.

13. The method of operation of a communication device as claimed in claim 12, further comprising the step of:
incrementally adjusting the transmit power level dependent on the transmit power level and the indicated position (s32).

14. A communication device, transmitting pilot bits and data bits associated with the pilot bits, the communication device **characterized by**:
means for dividing the pilot bits into a first set of bits and a second set of bits;
means for sending the first set of pilot bits at a first power level independent of the data rate of the associated data bits; and
means for sending the second set of pilot bits at a power level dependent on the data rate of the associated data bits.

## Patentansprüche

1. Verfahren zum Betrieb einer Kommunikationsvorrichtung zur Übermittlung von Pilotbits und von Datenbits, die den Pilotbits zugeordnet sind, wobei das Verfahren durch die folgenden Schritte **gekennzeichnet** ist:
Zerlegen eines Satzes von Pilotbits in einer Nachricht in einen ersten Satz von Pilotbits und in einen zweiten Satz von Pilotbits;
Senden des ersten Satzes von Pilotbits mit einem ersten Leistungspegel, der von der Datenrate der zugeordneten Datenbits unabhängig ist (s2); und
Senden des zweiten Satzes von Pilotbits mit einem Leistungspegel, der von der Datenrate der zugehörigen Datenbits abhängig ist (s4).

2. Verfahren zum Betrieb einer Kommunikationsvorrichtung nach Anspruch 1, wobei zumindest der zweite Satz von Pilotbits verwendet wird, um eine Kanalabschätzung zur Verfügung zu stellen und um Auswirkungen auf den Leistungssteuerungsvorgang zu minimieren und um Interferenz zu minimieren.

3. Verfahren zum Betrieb einer Kommunikationsvorrichtung nach Anspruch 1, wobei der erste Satz von Pilotbits genutzt wird, um eine Leistungssteuerung zur Verfügung zu stellen.

4. Verfahren zum Betrieb einer Kommunikationseinheit nach Anspruch 1, wobei der Leistungspegel des zweiten Satzes von Pilotbits bei niedrigen Datenraten der zugeordneten Datenbits gleich null gesetzt wird.

5. Verfahren zum Betrieb einer Kommunikationseinheit nach Anspruch 1, das weiter die folgenden Schritte aufweist:
Bestimmen eines ersten Verstärkungsfaktors für den ersten Satz von Pilotbits (s2);
Bestimmen eines zweiten Verstärkungsfaktors für den zweiten Satz von Pilotbits (s4);
Bestimmen eines Datenverstärkungsfaktors für die Datenbits (s6); und
Skalieren der Leistung, mit der die Datenbits und die Pilotbits übermittelt werden, in Übereinstimmung mit den jeweiligen Verstärkungsfaktoren und einer empfangenen Leistungssteuerungsnachricht (s8).

6. Verfahren zum Betrieb einer Kommunikationsvorrichtung nach Anspruch 5, wobei der zweite Verstärkungsfaktor für den zweiten Satz von Pilotbits bei niedrigen Datenraten der zugeordneten Datenbits gleich null gesetzt wird.

7. Verfahren zum Betrieb einer Kommunikationsvorrichtung nach Anspruch 1, wobei vor dem Schritt eines Erlangens von Kanalabschätzungsinformationen der zweite Satz von Pilotbits zwischengespeichert wird.

8. Verfahren zum Betrieb einer Kommunikationsvorrichtung nach Anspruch 1, das weiter die folgenden Schritte aufweist:
Bestimmen des Verstärkungsfaktors, der zum Übermitteln des zweiten Satzes von Pilotbits verwendet wird;
Erlangen von Informationen über die Leistungssteuerung aus dem ersten Satz von Pilotbits und auch aus dem zweiten Satz von Pilotbits unter Verwendung des bestimmten Verstärkungsfaktors.

9. Verfahren zum Betrieb einer Kommunikationsvorrichtung nach Anspruch 8, wobei der zur Übertragung des zweiten Satzes von Pilotbits verwendete Verstärkungsfaktor durch Signalgebungsinformationen, die von der Benutzervorrichtung empfangen werden, bestimmt wird.

10. Verfahren zum Betrieb einer Kommunikationsvorrichtung nach Anspruch 1, das weiter die folgenden Schritte aufweist:
Empfangen von Pilotbits, die Datenbits zugeordnet sind, mit einem empfangenen Signalpegel von einer Benutzervorrichtung (s36);
Vergleichen des empfangenen Signalpegels mit einer Mehrzahl von Schwellenwerten (S40);
Übermitteln eines Leistungssteuerungsbefehls, der eine Lage des empfangenen Signalpegels bezüglich zumindest einem der Mehrzahl von Schwellenwerten (S42) angibt.

11. Verfahren zum Betrieb einer Kommunikationsvorrichtung nach Anspruch 10, wobei der Schritt des Übertragens eines Leistungssteuerungsbefehls den Schritt des Übertragens mehrerer Leistungssteuerungsbefehle umfasst, von denen jeder die Lage des empfangenen Signalpegels zu einem der Mehrzahl von Schwellenwerten angibt.

12. Verfahren zum Betrieb einer Kommunikationsvorrichtung nach Anspruch 10, wobei die Schwellenwerte eine Vielzahl von Bereichen definieren und wobei der Schritt des Übertragens eines Leistungssteuerungsbefehls an die Benutzervorrichtung, der die Lage des empfangenen Signalpegels bezüglich mindestens einem der Mehrzahl von Schwellenwerten angibt, den Schritt eines Übertragens eines Leistungssteuerungsbefehls umfasst, der die Lage des empfangenen Signalpegels innerhalb eines der durch die Schwellenwerte definierten Bereiche angibt.

13. Verfahren zum Betrieb einer Kommunikationsvorrichtung nach Anspruch 12, das weiter den folgenden Schritt aufweist:
Stufenweises Einstellen des Übertragungsleistungspegels, in Abhängigkeit vom Übertragungsleistungspegel und der angegebenen Lage (s32).

14. Kommunikationsvorrichtung, die Pilotbits und den Pilotbits zugeordnete Datenbits überträgt, wobei die Kommunikationsvorrichtung **gekennzeichnet ist durch**:
Mittel zum Zerlegen der Pilotbits in einen ersten Satz von Pilotbits und in einen zweiten Satz von Pilotbits;
Mittel zum Senden des ersten Satzes von Pilotbits mit einem ersten Leistungspegel, der von der Datenrate der zugeordneten Datenbits unabhängig ist; und
Mittel zum Senden des zweiten Satzes von Pilotbits mit einem Leistungspegel, der von der Datenrate der zugeordneten Datenbits abhängt.

## Revendications

1. Procédé de fonctionnement d'un dispositif de commande pour la transmission de bits pilotes et de bits de données associés aux bits pilotes, le procédé étant **caractérisé par** les étapes qui consistent à :
diviser un ensemble de bits pilotes d'un message en un premier ensemble de bits pilotes et un deuxième ensemble de bits pilotes ;
envoyer le premier ensemble de bits pilotes à un premier niveau de puissance indépendant du débit de données des bits de données associés (s2) ; et
envoyer le deuxième ensemble de bits pilotes à un niveau de puissance dépendant du débit de données des bits de données associés (s4).

2. Procédé de fonctionnement d'un dispositif de communication selon la revendication 1, dans lequel au moins le deuxième ensemble de bits pilotes est utilisé pour fournir une estimation de canal et pour minimiser l'impact sur le processus de contrôle de la puissance et minimiser les interférences.

3. Procédé de fonctionnement d'un dispositif de communication selon la revendication 1, dans lequel le premier ensemble de bits pilotes est utilisé pour fournir un contrôle de puissance.

4. Procédé de fonctionnement d'un dispositif de communication selon la revendication 1, dans lequel le niveau de puissance du deuxième ensemble de bits pilotes est réglé à zéro aux bas débits de données des bits de données associés.

5. Procédé de fonctionnement d'un dispositif de communication selon la revendication 1, comprenant, en outre, les étapes consistant à :
déterminer un premier facteur de gain pour le premier ensemble de bits pilotes (s2) ;
déterminer un deuxième facteur de gain pour le deuxième ensemble de bits pilotes (s4) ;
déterminer un facteur de gain de données pour les bits de données (s6) ; et
adapter la puissance à laquelle les bits de données et les bits pilotes sont transmis en fonction des facteurs de gain respectifs et d'un message de contrôle de puissance reçu (s8).

6. Procédé de fonctionnement d'un dispositif de communication selon la revendication 5, dans lequel le deuxième facteur de gain pour le deuxième ensemble de bits pilotes est réglé à zéro aux bas débits de données des bits de données associés.

7. Procédé de fonctionnement d'un dispositif de communication selon la revendication 1, dans lequel le deuxième ensemble de bits pilotes est mis en mémoire tampon avant l'étape d'obtention des informations d'estimation de canal.

8. Procédé de fonctionnement d'un dispositif de communication selon la revendication 1, comprenant, en outre, les étapes consistant à :
déterminer le facteur de gain utilisé pour la transmission du deuxième ensemble de bits pilotes ;
obtenir des informations de contrôle de puissance du premier ensemble de bits pilotes, et également du deuxième ensemble de bits pilotes à l'aide du facteur de gain déterminé.

9. Procédé de fonctionnement d'un dispositif de communication selon la revendication 8, dans lequel le facteur de gain utilisé pour la transmission du deuxième ensemble de bits pilotes est déterminé à partir d'informations de signalisation reçues du dispositif d'utilisateur.

10. Procédé de fonctionnement d'un dispositif de communication selon la revendication 1, comprenant, en outre, les étapes consistant à :
recevoir des bits pilotes, associés à des bits de données, à un niveau de signal reçu d'un dispositif d'utilisateur (s36) ;
comparer le niveau de signal reçu à une pluralité de valeurs seuils (s40) ;
transmettre une commande de contrôle de puissance indiquant une position du niveau de signal reçu par rapport à au moins l'un des différents seuils (s42).

11. Procédé de fonctionnement d'un dispositif de communication selon la revendication 10, dans lequel l'étape de transmission d'une commande de contrôle de puissance comprend l'étape consistant à transmettre plusieurs commandes de contrôle de puissance, chacune d'elles indiquant la position du niveau de signal reçu par rapport à l'un des différents seuils.

12. Procédé de fonctionnement d'un dispositif de communication selon la revendication 10, dans lequel les seuils définissent une pluralité de régions et l'étape de transmission d'une commande de contrôle de puissance au dispositif d'utilisateur indiquant la position du niveau de signal reçu par rapport à au moins l'un des différents seuils comprend l'étape consistant à transmettre une commande de contrôle de puissance indiquant la position du niveau de signal reçu dans l'une des régions définies par les seuils.

13. Procédé de fonctionnement d'un dispositif de communication selon la revendication 12, comprenant, en outre, les étapes consistant à:
ajuster de manière incrémentielle le niveau de puissance de transmission en fonction du niveau de puissance de transmission et de la position indiquée (s32).

14. Dispositif de communication transmettant des bits pilotes et des bits de données associés aux bits pilotes, le dispositif de communication étant **caractérisé par** :
des moyens pour diviser les bits pilotes en un premier ensemble de bits et un deuxième ensemble de bits ;
des moyens pour envoyer le premier ensemble de bits pilotes à un premier niveau de puissance indépendant du débit de données des bits de données associés ; et
des moyens pour envoyer le deuxième ensemble de bits pilotes à un niveau de puissance dépendant du débit de données des bits de données associés.
